# EUROPÄISCHE PATENTSCHRIFT

(11) **EP 4 060 215 B1**
(45) Veröffentlichungstag und Bekanntmachung des Hinweises auf die Patenterteilung: **17.12.2025**
(21) Anmeldenummer: 22161867.1
(22) Anmeldetag: 14.03.2022
(51) Int. Cl.: F16L 21/00, F16L 25/14

(54) **ROHRKUPPLUNG ZUR KOPPLUNG ZWEIER ROHRE MIT UNTERSCHIEDLICHEN AUSSENDURCHMESSERN**
PIPE COUPLING FOR COUPLING TWO PIPES WITH DIFFERENT EXTERNAL DIAMETERS
RACCORD DE TUBE DESTINÉ AU RACCORDEMENT DE DEUX TUBES DE DIAMÈTRES EXTÉRIEURS DIFFÉRENTS

(30) Priorität: 17.03.2021 DE 202021101368 U
(43) Veröffentlichungstag der Anmeldung: 21.09.2022
(73) Patentinhaber: M.D.S. Meyer GmbH, 49456 Bakum (DE)
(72) Erfinder:
(74) Vertreter: Meissner Bolte Partnerschaft mbB

(56) Entgegenhaltungen:
- DE-U1- 202010 013 624
- US-B2- 8 651 532

## Beschreibung

Die Erfindung betrifft eine Rohrkupplung zur Kopplung zweier Rohre mit unterschiedlichen Außendurchmessern, insbesondere von Kanalisationsrohren.

In der Praxis kommt es immer wieder vor, dass aus Kunststoff, Steinzeug oder Beton bestehende Kanalisationsrohre unterschiedlichen Durchmessers miteinander zu verbinden sind. Eine Sammelleitung mit einem Außendurchmesser von 265 mm kann z.B. mit einer Zuführleitung mit einem Außendurchmesser von 200 mm zu verbinden sein. Sofern keine aus festem Kunststoff zur Verfügung stehende Muffe vorhanden ist oder nicht axial gerichtete Rohre vorliegen, ist es erforderlich, flexible Kupplungen zu verwenden, die einerseits druckfest und flüssigkeitsdicht und andererseits im Durchmesser bis zu einem gewissen Grad variierbar sind.

Dazu ist es bekannt, elastomere Rohrabschnitte zu verwenden, die die gegenüberstehenden Spitzenden der zu verbindenden Rohre aufnehmen. Die Befestigung der elastomeren Rohrabschnitte an den zu verbindenden Rohren erfolgt in der Regel mittels Spannschellen. Um den elastomeren Rohrabschnitt in der Wandstärke klein halten zu können und eine ausreichende Flexibilität zur Überbrückung von Durchmesserstufen der zu verbindenden Rohre zu ermöglichen, sind Scherbleche bekannt, die auf die Außenseite des elastomeren Rohrabschnitts aufgebracht werden. Die Spannschellen befestigen die elastomeren Rohrabschnitte über die Scherbleche an der Außenseite der Spitzenden der Rohre. Die Scherbleche sind im Bereich des Rohres mit kleinerem Durchmesser in Axialrichtung mit einer Reihe von Ausschnitten versehen, um in diesem Bereich den Durchmesser der Scherbleche beim Festziehen der entsprechenden Spannschelle verringern zu können, ohne dass eine Überlappung von Teilen der Scherbleche stattfindet.

Eine entsprechende Ausbildung einer Rohrkupplung ist aus der EP 3 354 953 A1 bekannt. Dort ist das dem Rohr kleineren Durchmessers zugewandte Ende des Scherblechs mit axial gerichteten Ausschnitten versehen, die sich in der Weite entweder gleichmäßig ändern oder in einem Bereich eine konstante Weite und in einem anderen Bereich eine variierende Weite aufweisen. Die beiden Enden des Scherblechs sind in Taschen aufgenommen, die durch Umklappen von Endbereichen des elastomeren Rohrabschnitts gebildet sind, wobei die Spannschellen auf die umgeklappten Enden des elastomeren Rohrabschnitts aufgebracht sind.

Die Aufnahme der Enden eines Scherblechs in umgeklappten Endbereichen eines elastomeren Rohrabschnitts zur Verbindung zweier Rohre und das Aufbringen von Spannschellen auf die umgeklappten Endbereiche des elastomeren Rohrabschnitts ist auch bereits aus der DE 2 109 566 A bekannt.

In der DE 20 2010 013 624 U1 sind Scherbleche mit keilförmig gestalteten Ausschnitten angegeben. Auch hierbei werden Spannschellen auf die Enden des Scherblechs aufgebracht, um den elastomeren Rohrabschnitt an den zu verbindenden Rohrenden zu befestigen.

Der Erfindung liegt die Aufgabe zugrunde, eine Rohrkupplung zur Kopplung zweier Rohre mit unterschiedlichen Außendurchmessern mittels eines elastomeren Rohrabschnitts anzugeben, die gegenüber dem Stand der Technik einfacher ausgebildet ist, kostengünstiger herstellbar ist und die Möglichkeit bietet, größere Durchmesserunterschiede zweier zu verbindender Rohre zu überbrücken.

Diese Aufgabe wird durch die in den Ansprüchen angegebene Erfindung gelöst. Weitergehende Ausbildungen der Erfindung sind in Unteransprüchen angegeben.

Die Erfindung geht aus von der genannten EP 3 354 953 A1, welche eine Rohrkupplung mit einem elastomeren Rohrabschnitt zeigt, bei der die Enden des aufgebrachten Scherblechs in Taschen des elastomeren Rohrabschnitts aufgenommen sind. Mittels auf die Außenseite der Taschen aufgebrachter Spannschellen erfolgt die Befestigung des elastomeren Rohrabschnitts an den zu verbindenden Rohrenden.

Die US 8 651 532 B2 betrifft eine Rohrkupplung aus dem Stand der Technik und offenbart die Präambel des Anspruchs 1.

Gemäß der Erfindung ist das Scherblech entlang seiner Länge in Axialrichtung gespalten und derart auf den Außenumfang des elastomeren Rohrabschnitts aufgebracht, dass es an dem Ende des Rohres mit größerem Durchmesser mittels einer Spannschraubverbindung unter Verklemmung des elastomeren Rohrabschnitts an den Durchmesser des Rohres größeren Durchmesser anpassbar ist. Um Durchmesserabweichungen der zu verbindenden Rohre überbrücken zu können, weist das Scherblech an seinem zweiten Ende eine Reihe von Ausschnitten mit einer solchen Weite auf, dass der Durchmesser des mittels einer auf das Scherblech aufgebrachten Spannschelle zusammengedrückten elastomeren Rohrabschnitts erheblich verkleinert werden kann, um den elastomeren Rohrabschnitt auf das Ende des Rohres mit kleinerem Durchmesser aufzubringen. Die Ausschnitte des Scherblechs sind dabei jeweils schräg zur Achse ausgerichtet und weisen im Wesentlichen eine rechtwinklige Schnittform auf, bei der die Weite der Ausschnitte entlang ihrer Länge konstant bleibt.

Die Erfindung ermöglicht es, an dem Rohr größeren Durchmessers auf die Aufnahme des Endes des Scherblechs in einer Tasche des elastomeren Rohranschnitts zu verzichten, indem die Spannschraubverbindung unmittelbar an den gegenüberstehenden Rändern des gespaltenen Scherblechs befestigt ist. Damit ist an diesem Ende des Scherblechs auch keine Spannschelle erforderlich.

Die Ausbildung der Ausschnitte als schräg gegenüber der Scherblechachse verlaufende Ausschnitte hat den besonderen Vorteil, dass dadurch die Länge der zwischen den Ausschnitten verbleidenden Druckflächen gegenüber rein in Axialrichtung verlaufenden Ausschnitten vergrößert werden kann und somit die Möglichkeit besteht, gegenüber dem Stand der Technik auch größere Durchmesserabstufungen von zu verbindenden Rohren überbrücken zu können.

Vorzugsweise ist das Scherblech aus wenigstens zwei axial gerichteten Teilschalen gebildet. Dadurch ergeben sich eine leichtere Verschiebbarkeit der Teile des Scherblechs bei der Durchmesserverkleinerung und gleichzeitig die Vermeidung einer Stauchung des elastomeren Rohrabschnitts in Umfangsrichtung. Die Teilschalen sind an ihren gegeneinander gerichteten Kanten am dem Ende des Scherblechs, das mit dem Rohr größeren Durchmesser zu verbinden ist, mit jeweils einer Spannschraubverbindung versehen, so dass auch bei Nutzung mehrerer Teilschalen dort keine Spannschelle erforderlich ist.

Die Spannschelle an dem Ende des Scherblechs, die die Durchmesseranpassung des elastomeren Rohrabschnitts an das Rohr kleineren Durchmessers bewirkt, kann anstelle ihrer Aufnahme in einer Tasche des elastomeren Rohrabschnitts vorzugsweise auch mit einer elastomeren Zwischenlage versehen sein, die vorab an der Spannschelle befestigt oder bereits bei der Fertigung auf die Spannschelle aufgebracht wurde.

Die Ausschnitte des Scherblechs weisen entlang ihrer Länge im Wesentlichen die gleiche Weite auf. Sie können jedoch insbesondere im Übergangsbereich zwischen dem Bereich mit größerem Durchmesser und dem Bereich, in dem der Durchmesser verkleinert werden soll, eine variierende Schnittform aufweisen.

Eine bevorzugte Ausgestaltung der Erfindung besteht auch darin, dass die Druckflächen zwischen den Ausschnitten im Übergangsbereich zwischen dem Bereich des zu verkleinernden Durchmessers und dem Bereich des größeren Durchmessers ein oder mehrere Durchbrüche, insbesondere Langlöcher oder Schlitze, enthalten, die in Umfangsrichtung des Scherblechs gerichtet sind. Dadurch ergeben sich verbesserte Abbiegungen der Druckflächen bei der Durchmesseränderung des Scherblechs.

Aufgrund der gespaltenen oder mehrere Teilschalen aufweisenden Ausbildung des Scherblechs erlaubt die Erfindung auch die Anpassung an Rohre mit unterschiedlichem Durchmesser an der Seite der Kupplung, die an das Rohr mit größerem Durchmesser angesetzt ist, so dass sich ein breiter Einsatzbereich ergibt, der die notwendige Zahl unterschiedlicher Kupplungen weiter verringern hilft.

Die Erfindung wird nachstehend an Hand eines Ausführungsbeispiels näher erläutert. Es zeigen:
- Fig. 1: eine perspektivische Ansicht einer Kupplung nach der Erfindung
- Fig. 2: eine Seitenansicht der Kupplung von Fig. 1
- Fig. 3: eine perspektivische Ansicht eines Scherblechs
- Fig. 4: eine Seitenansicht eines Scherblechs
- Fig. 5: eine geteilte Ansicht eines Scherblechs
- Fig. 6: eine Schnittansicht durch die erfindungsgemäße Kupplung, und
- Fig. 7: eine Detailansicht einer weiteren Ausführungsform

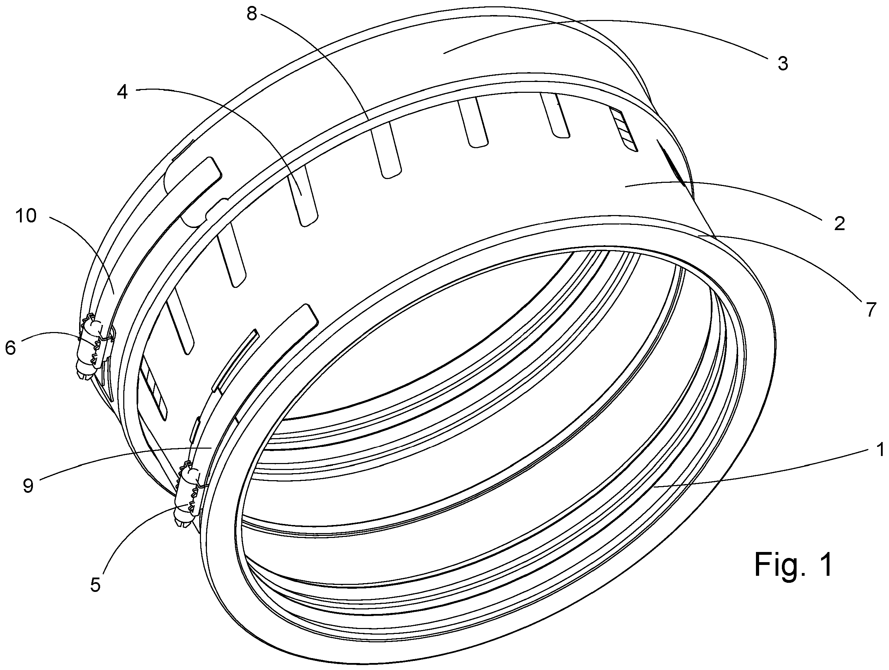

Die in Figur 1 dargestellte Kupplung enthält eine als elastomerer Rohrabschnitt ausgebildete Manschette 1 zur Verbindung zweier Rohre unterschiedlichen Durchmessers, z.B. eines Rohres mit einem Außendurchmesser von 265 mm und eines zweiten Rohres mit einem kleineren Außendurchmesser von 200 mm. Die Manschette 1 ist von einem rohrabschnittsförmigen Scherblech 2 umgeben, welches axial gespalten ist und daher im Durchmesser verkleinert werden kann. An dem Ende der Manschette, das mit dem Rohr größeren Außendurchmessers zu verbinden ist, lässt sich das Scherblech 2 mittels einer Spannschraubverbindung 5 zusammenziehen, indem ein Spannband 9, das an einer Längskante des Scherblechs 2 ausgebildet ist, über ein Schneckengewinde der Spannschraubverbindung 5 angezogen werden kann. Derartige Spannschraubverbindungen sind als Verbindungselemente an Spannschellen und Schlauchschellen in der Installationstechnik bekannt.

Bei der Erfindung wird eine derartige Verbindung in der Weise verwendet, dass das Spannband 9 unmittelbar als ein Teil des Scherblechs ausgebildet sein kann, das sich an der ersten Längskante des Scherblechs befindet, während das Schneckengewinde der Spannschraubverbindung unmittelbar an der zweiten Längskante des Scherblechs angeordnet ist. Das Scherblech bildet damit selbst eine Spannschelle, wodurch keine gesonderte Spannschelle zur Befestigung des Scherblechs erforderlich ist.

Das Scherblech 2 ist an seinem zweiten Ende mit einer Reihe von Ausschnitten 4 versehen, die es ermöglichen, das Scherblech in diesem Bereich im Durchmesser erheblich verkleinern zu können. Dies erfolgt dadurch, dass eine auf den mit Ausschnitten 4 versehenen Bereich des Scherblechs 2 aufgebrachte Spannschelle 3 über eine darauf angeordnete Spannschraubverbindung 6 angezogen wird. Das Schneckengewinde der Spannschraubverbindung wirkt dabei auf das Spannband 10 der Spannschelle 3 ein, wodurch die gegenüberliegenden Kanten der Spannschelle 3 auf bekannte Weise zusammengezogen werden. Die damit einhergehende Durchmesserverkleinerung wirkt auf das Scherblech 2 ein und drückt das Scherblech 2 in diesem Bereich zusammen, so dass sich eine Durchmesserverkleinerung ergibt, die somit auch zum erwünschten Zusammendrücken der Manschette 1 in diesem Bereich führt.

Zur Vermeidung, dass die Spannschelle 3 unmittelbar auf dem Scherblech aufliegt, wird das äußere Ende der Manschette 1 am Rohr mit kleinerem Außendurchmesser zunächst um 180° umgeklappt, bevor die Spannschelle 3 aufgebracht wird. Dadurch kann das dem Rohr mit kleinerem Außendurchmesser zugewandte Ende des Scherblechs 2 in eine durch das Umklappen des Manschettenendes gebildete Tasche 8 eingeschoben werden. Erst dann wird die Spannschelle 3 auf die Kupplung aufgebracht und befestigt.

Figur 1 zeigt auch eine an der Manschette ausgebildete Randwulst 7, welche ein Abrutschen des Scherblechs von der Manschette verhindert.

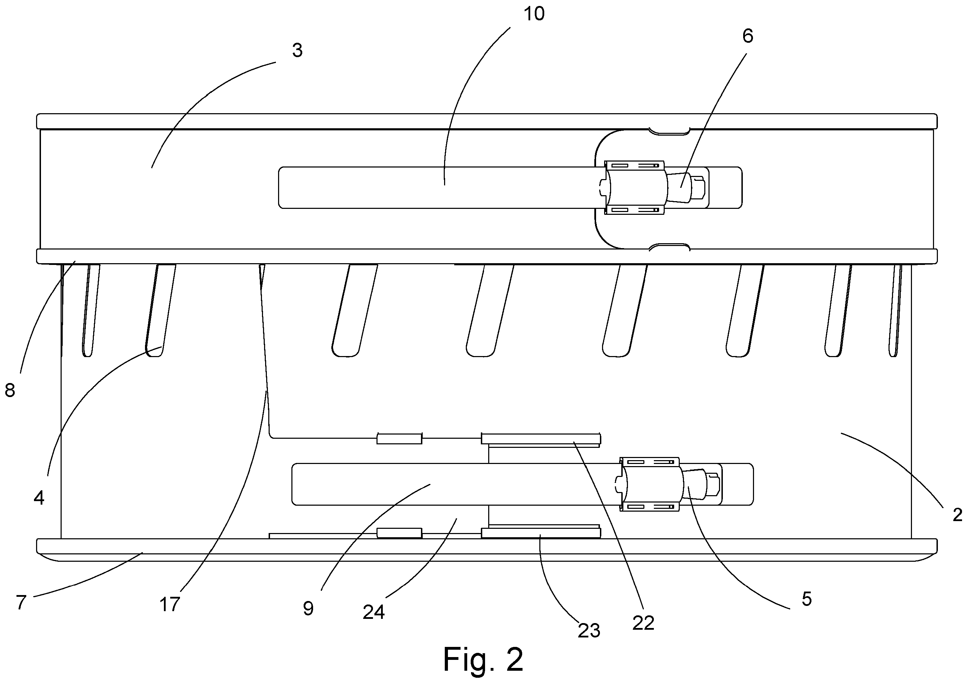

Figur 2 zeigt eine Seitenansicht der Kupplung von Figur 1. Hier ist deutlich die Spannschraubverbindung 5 mit dem Spannband 9 und der Schneckengewindeschraube als Teil der Spannschraubverbindung 5 dargestellt. Das Spannband 9 ist hierbei auf eine Lasche 24 im Endbereich einer Seitenkante des Scherblechs 2 aufgenietet, während die Schneckengewindeschraube auf dem gegenüberliegenden Endbereich an der anderen Seitenkante des Scherblechs befestigt ist. Die beiden Kanten des Scherblechs 2 sind an der Trennkannte 17 voneinander getrennt. Die Lasche 24 ist in Aufkantungen 22 und 23 auf dem gegenüberliegenden Teil des Scherblechs 2 geführt, um eine Verkantung der Lasche 24 zu verhindern.

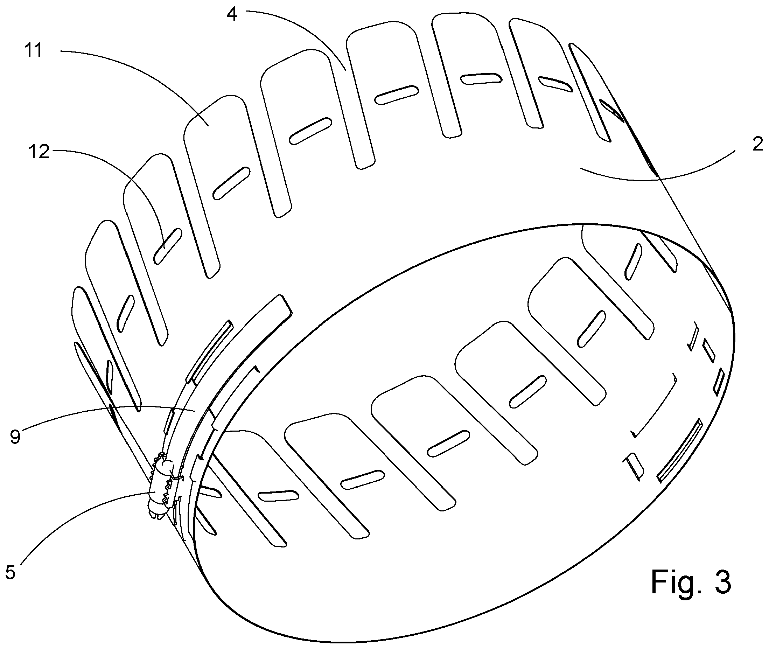

Figur 3 zeigt ein Scherblech 2 in isolierter Ansicht, wobei die durch die Ausschnitte 4 gebildeten Druckflächen 11 verdeutlicht werden. Die Ausschnitte 4 weisen eine im Wesentlichen rechtwinklige Form auf, bei der die Weite der Ausschnitte entlang ihrer Länge konstant bleibt. Um ein leichteres Abbiegen der Druckflächen bei der Durchmesserverkleinerung zu ermöglichen, enthalten die Druckflächen 11 Ausnehmungen 12, die in Umfangsrichtung des Scherblechs verlaufen und definierte Knickstellen der Druckflächen bilden. Die Ausnehmungen 12 befinden sich in einem Bereich unmittelbar im Eintrittsbereich des Scherblechs 2 in die Tasche 8. Damit können die Druckflächen 11 auf vorteilhaftere Weise der Längsachse der Oberfläche des Rohres mit kleinerem Außendurchmesser folgen.

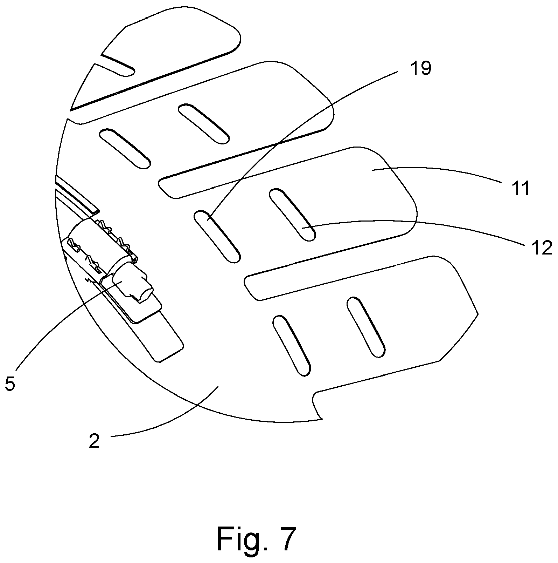

Eine noch weitere Verbesserung der Anpassung an die Rohroberfläche lässt sich erreichen, wenn die Druckflächen weitere im Umlaufrichtung des Scherblechs gerichtete Ausnehmungen 19 gemäß Figur 7 enthalten, die im Abstand von den Ausnehmungen 12 im Wurzelbereich der Druckflächen ausgebildet sind, so dass beim Zusammendrücken der Druckflächen ein abgestufter Verlauf der Druckflächen 11 in Längsrichtung erreichbar ist.

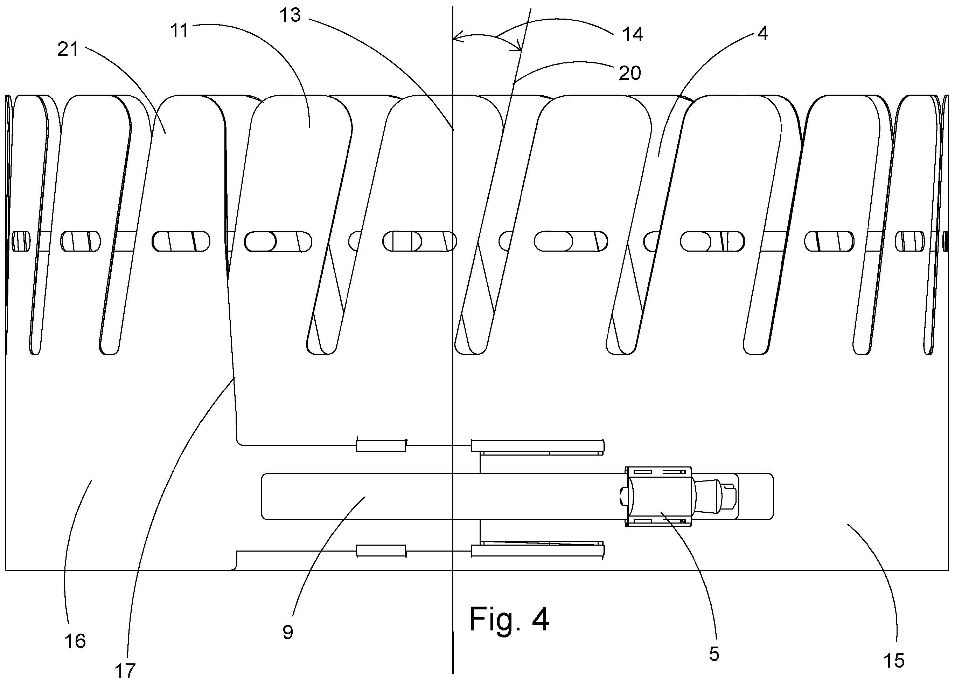

Figur 4 zeigt eine Seitenansicht des Scherblechs 2. Das Scherblech 2 ist zweigeteilt in zwei Teilschalen 15 und 16 aufgeteilt, die an beiden Kanten jeweils über Spannschraubverbindungen miteinander verbunden sind. Die Zweiteilung des Scherblechs vermeidet auf vorteilhafte Weise die Entstehung von Verwerfungen der Manschette beim Anziehen der Spannschraubverbindungen.

Figur 4 zeigt, dass die Druckflächen 11 nicht in Axialrichtung des Scherblechs verlaufen, sondern um einen Winkel 14 gegenüber der Achsrichtung schräg gestellt sind. Der Winkel 14 zwischen der Achsrichtung 13 und den Kanten 20 der Druckflächen 11 beträgt vorzugsweise 10 - 60 °, weiter vorzugsweise 20 - 30°, je nach erforderlicher Durchmesseranpassung der Rohre. Ein größerer Winkel weist den Vorteil auf, dass sich die Länge der Druckflächen damit vergrößert und so der mögliche Bereich der Durchmesserverringerung vergrößert werden kann. Die Schrägstellung und vergrößerte Länge der Druckflächen 11 erlaubt es ferner, eine verbesserte Anpassung an die Oberflächenwölbung des Rohres mit kleinerem Außendurchmesser durch erhöhte Flexibilität der Druckflächen zu erreichen. Durch einen größeren Winkel kann auch die Weite der Ausschnitte bei gleichzeitig erhöhter Variationsbreite der Durchmesseranpassung verringert werden.

Figur 4 zeigt auch, dass die Druckfläche 21 der Teilschale 15 eine in Richtung der Trennkante 17 verlaufende Seitenkante aufweist, während die angrenzende Seitenkante der Teilschale 15 dazu im spitzen Winkel verläuft. Die hat den Vorteil, dass die Teilschalen bei Verbiegung der Druckflächen 11 ohne Verhaken aufeinander verschiebbar sind.

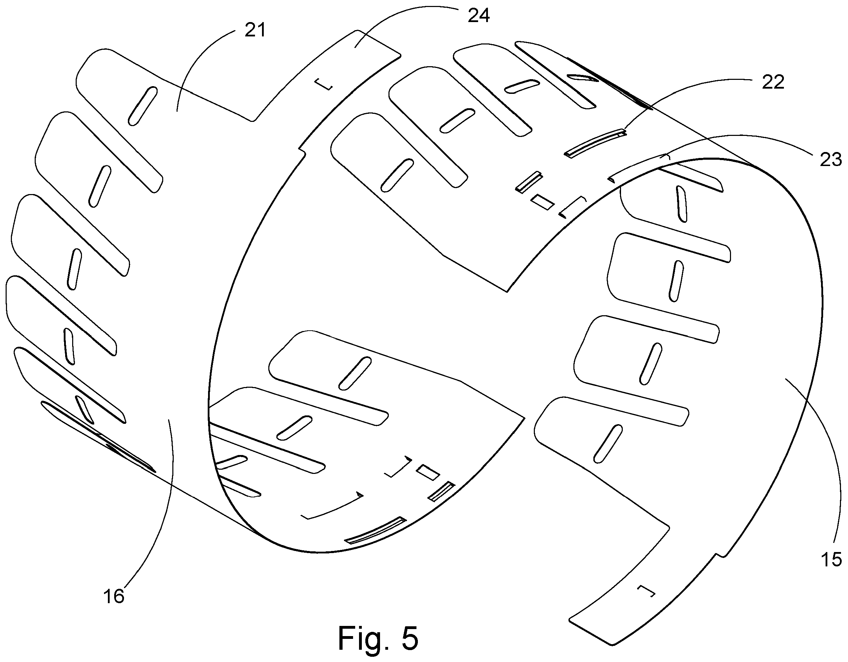

In Figur 5 sind die Teilschalen getrennt voneinander dargestellt. Sie enthalten an einer Kante jeweils eine Lasche 24, die auf der gegenüberliegenden Teilschale in Aufkantungen 22 und 23 geführt wird.

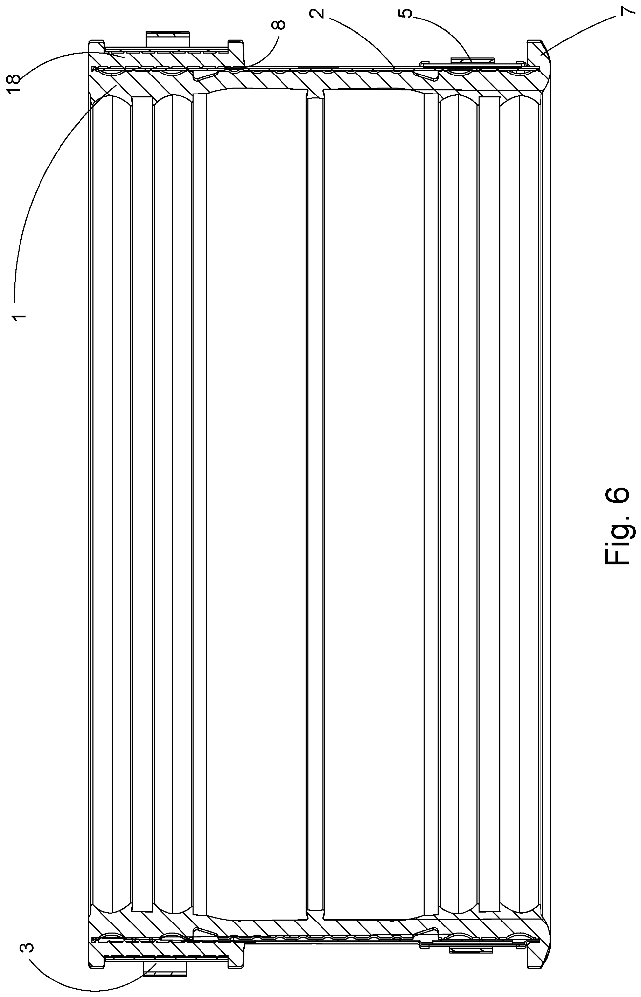

Figur 6 zeigt eine Kupplung in Schnittansicht zur Darstellung ihres Aufbaus. Die Manschette ist als elastomerer Rohrabschnitt aus Gummimaterial mit innenseitiger Profilierung ausgeführt. In dem Bereich der Manschette, in dem sie an das Rohr mit kleinerem Außendurchmesser angesetzt wird, wird ihr Endbereich um 180° umgeklappt, so dass sich eine Klappe 18 bildet, die einen Spalt definiert, der als Tasche 8 das mit Druckflächen versehene Ende des Scherblechs 2 aufnehmen kann. Auf die Außenseite der Klappe 18 ist die Spannschelle 3 aufgebracht. Am Ende des Scherblechs 2, das die Manschette an dem Rohr mit größerem Außendurchmesser befestigt, weist das Scherblech selbst Spannschraubverbindungen 5 auf, so dass hier auf eine Spannschelle verzichtet werden kann.

In weiterer Ausgestaltung der Erfindung kann das Scherblech auch umlaufende Profilierungen ähnlich einem Wellrohr enthalten, die es erlauben, dass die Kupplung auch in Grenzen für die Verbindung zweier Rohre nutzbar ist, die im Winkel oder etwas versetzt zueinander stehen.

Schließlich können insbesondere für einen temporären Einsatz der Kupplung anstelle von Spannschraubverbindungen auch Kniehebel-Spannverbindungen verwendet werden, die ein leichteres Lösen einer Spannverbindung erlauben.

### Bezugszeichen

- 1: Manschette
- 2: Scherblech
- 3: Spannschelle
- 4: Ausschnitt
- 5: Spannschraubverbindung
- 6: Spannschraubverbindung
- 7: Randwulst
- 8: Tasche
- 9: Spannband
- 10: Spannband
- 11: Druckfläche
- 12: Ausnehmung
- 13: Achsrichtung
- 14: Winkel
- 15: Teilschale
- 16: Teilschale
- 17: Trennkante
- 18: Klappe
- 19: Ausnehmung
- 20: Kante
- 21: Druckfläche
- 22: Aufkantung
- 23: Aufkantung
- 24: Lasche

## Patentansprüche

1. Rohrkupplung zur Kopplung eines ersten Rohres mit einem ersten größeren Außendurchmesser und eines zweiten Rohres mit einem zweiten kleineren Außendurchmesser mittels eines die Rohre verbindenden elastomeren Rohrabschnitts, welcher von einem Scherblech (2) umgeben ist, wobei der elastomere Rohrabschnitt mittels des Scherblechs (2) an seinem ersten Ende an dem ersten Rohr und an dem zweiten Ende an dem zweiten Rohr befestigbar ist, wobei der dem zweiten Rohr zugewandte Abschnitt des Scherblechs (2) mit Ausschnitten (4) versehen ist, welche eine Reihe von verbleibenden Druckflächen (11, 21) des Scherblechs (2) voneinander trennen und welche es bei der Befestigung des zweiten Endes des Scherblechs (2) an dem zweiten Rohr ermöglichen, dass die Druckflächen (11, 21) zwischen den Ausschnitten (4) das dem zweiten Rohr zugewandte Ende des elastomeren Rohrabschnitts derart verpressen, dass der elastomere Rohrabschnitt an dem zweiten Rohr zur Anlage kommt, wobei das Scherblech (2) entlang seiner Länge in Axialrichtung gespalten ist, und wobei das Scherblech (2) an seinem dem zweiten Rohr zugewandten Ende beim Festziehen einer auf das Scherblech (2) aufgebrachten Spannschelle (3) den elastomeren Rohrabschnitt auf dem zweiten Rohr verklemmt und im Durchmesser verkleinert, **dadurch gekennzeichnet,**
- **dass** das Scherblech (2) an seinem dem ersten Rohr zugewandten Ende auf den Außenumfang des elastomeren Rohrabschnitts aufbringbar und mittels an dem Scherblech befestigter Spannschraubverbindung (5, 6) unter Verklemmung des elastomeren Rohrabschnitts im Durchmesser verkleinerbar ist, und
- **dass** die Ausschnitte (4) jeweils schräg zur Achse des Scherblechs (2) ausgerichtet und endseitig offen sind, wobei die Ausschnitte eine im Wesentlichen rechtwinklige Schnittform aufweisen, bei der die Weite der Ausschnitte entlang ihrer Länge konstant bleibt.

2. Rohrkupplung nach Anspruch 1, **dadurch gekennzeichnet, dass** das Scherblech (2) aus wenigstens zwei in Axialrichtung getrennten Teilschalen (15, 16) gebildet ist, die an ihrem dem Rohr mit größerem Außendurchmesser zugewandten Ende des Scherblechs (2) auf dem Außenumfang des elastomeren Rohrabschnitts mittels Spannschraubverbindung (5, 6) miteinander verbindbar sind.

3. Rohrkupplung nach Anspruch 1, **dadurch gekennzeichnet, dass** die Spannschelle (3) über eine elastomere Zwischenlage auf das zweite Ende des Scherblechs (2) aufbringbar ist.

4. Rohrkupplung nach Anspruch 3, **dadurch gekennzeichnet, dass** die elastomere Zwischenlage als ein um 180 °umgeschlagenes Ende des elastomeren Rohrabschnitts gebildet ist, wobei das mit Ausschnitten (4) versehene Ende des Scherblechs (2) in einer Tasche (8) am Ende des elastomeren Rohrabschnitts aufgenommen ist.

5. Rohrkupplung nach Anspruch 3, **dadurch gekennzeichnet, dass** die elastomere Zwischenlage an der Spannschelle (3) befestigt ist.

6. Rohrkupplung nach Anspruch 1, **dadurch gekennzeichnet, dass** die Ausschnitte (4) eine entlang ihrer Länge in der Breite variierende Schnittform aufweisen.

7. Rohrkupplung nach Anspruch 1, **dadurch gekennzeichnet, dass** der elastomere Rohrabschnitt an wenigstens einem Ende einen radial nach außen gerichteten Randwulst (7) aufweist.

8. Rohrkupplung nach Anspruch 1, **dadurch gekennzeichnet, dass** die Druckflächen (11, 21) im axial mittleren Bereich des Scherblechs (2) außerhalb des Endbereichs des Scherblechs (2) jeweils mit einer oder mehreren Ausnehmungen (12, 19) versehen sind.

9. Rohrkupplung nach Anspruch 6, **dadurch gekennzeichnet, dass** die Ausnehmungen (12, 19) in Umfangsrichtung des Scherblechs (2) länglich ausgebildet sind.

## Claims

1. A pipe coupling for coupling a first pipe with a first larger external diameter and a second pipe with a second smaller external diameter by means of an elastomeric pipe section which connects the pipes and is surrounded by a shear plate (2), wherein the elastomeric pipe section can be fastened by means of the shear plate (2) at its first end to the first pipe and at the second end to the second pipe, wherein the section of the shear plate (2) facing the second pipe is provided with cutouts (4) which separate a series of remaining pressure surfaces (11, 21) of the shear plate (2) from one another and which make it possible, when the second end of the shear plate (2) is fastened to the second pipe, for the pressure surfaces (11, 21) between the cutouts (4) to press the end of the elastomeric pipe section facing the second pipe in such a way that the elastomeric pipe section comes to rest on the second pipe, wherein
the shear plate (2) is split in the axial direction along its length, and
wherein the shear plate (2), at its end facing the second pipe, clamps the elastomeric pipe section on the second pipe and reduces its diameter when a clamping clip (3) applied to the shear plate (2) is tightened, **characterised in that**
- the shear plate (2), at its end facing the first pipe, can be applied to the external circumference of the elastomeric pipe section and can be reduced in diameter by means of a clamping screw connection (5, 6) fastened to the shear plate, clamping the elastomeric pipe section, and
- the cutouts (4) are each aligned obliquely to the axis of the shear plate (2) and are open at the end, wherein the cutouts have a substantially rectangular sectional shape, in which the width of the cutouts remains constant along their length.

2. The pipe coupling according to Claim 1, **characterised in that** the shear plate (2) is formed from at least two partial shells (15, 16) which are separated in the axial direction and which, at their end of the shear plate (2) facing the pipe with the larger external diameter, can be connected to one another on the external circumference of the elastomeric pipe section by means of a clamping screw connection (5, 6).

3. The pipe coupling according to Claim 1, **characterised in that** the clamping clip (3) can be applied to the second end of the shear plate (2) via an elastomeric intermediate layer.

4. The pipe coupling according to Claim 3, **characterised in that** the elastomeric intermediate layer is formed as an end of the elastomeric pipe section, which is turned over by 180°, wherein the end of the shear plate (2) provided with cutouts (4) is received in a pocket (8) at the end of the elastomeric pipe section.

5. The pipe coupling according to Claim 3, **characterised in that** the elastomeric intermediate layer is fastened to the clamping clip (3).

6. The pipe coupling according to Claim 1, **characterised in that** the cutouts (4) have a sectional shape which varies in width along their length.

7. The pipe coupling according to Claim 1, **characterised in that** the elastomeric pipe section has a radially externally directed edge bead (7) at one end at least.

8. The pipe coupling according to Claim 1, **characterised in that** the pressure surfaces (11, 21) are each provided with one or more recesses (12, 19) in the axially central region of the shear plate (2) outside the end region of the shear plate (2).

9. The pipe coupling according to Claim 6, **characterised in that** the recesses (12, 19) are configured in an elongated manner in the circumferential direction of the shear plate (2).

## Revendications

1. Raccord pour tubes, destiné à accoupler un premier tube présentant un premier diamètre externe plus grand et un second tube présentant un second diamètre externe plus petit au moyen d'une section tubulaire élastomère reliant les tubes, qui est entourée par une tôle de cisaillement (2), la section tubulaire élastomère pouvant être fixée au moyen de la tôle de cisaillement (2) au niveau de sa première extrémité au premier tube et au niveau de la seconde extrémité au second tube, la section orientée vers le second tube de la tôle de cisaillement (2) étant pourvue de découpes (4), qui séparent une série de surfaces de compression (11, 21) résiduelles de la tôle de cisaillement (2) les unes des autres et qui permettent, lors de la fixation de la seconde extrémité de la tôle de cisaillement (2) au second tube, que les surfaces de compression (11, 21) entre les découpes (4) compriment l'extrémité orientée vers le second tube de la section tubulaire élastomère de telle sorte que la section tubulaire élastomère vient en appui contre le second tube,
la tôle de cisaillement (2) étant fendue le long de sa longueur dans la direction axiale et
la tôle de cisaillement (2) enserrant, au niveau de son extrémité orientée vers le second tube, lors du serrage d'un collier de serrage (3) appliqué sur tôle de cisaillement (2), la section tubulaire élastomère sur le second tube et la réduisant en diamètre, **caractérisé**
- **en ce que** la tôle de cisaillement (2) peut être appliquée, au niveau de son extrémité orientée vers le premier tube, sur la périphérie externe de la section tubulaire élastomère et peut être réduite en diamètre au moyen d'une liaison par vis de serrage (5, 6) fixée à la tôle de cisaillement avec serrage de la section tubulaire élastomère et
- **en ce que** les découpes (4) sont à chaque fois inclinées par rapport à l'axe de la tôle de cisaillement (2) et ouvertes côté extrémité, les découpes présentant une forme de coupe sensiblement rectangulaire, dans laquelle la largeur des découpes reste constante le long de leur longueur.

2. Raccord pour tubes selon la revendication 1, **caractérisé en ce que** la tôle de cisaillement (2) est formée à partir d'au moins deux coques partielles (15, 16) séparées dans la direction axiale, qui peuvent être reliées l'une à l'autre au niveau de leur extrémité orientée vers le tube présentant le diamètre externe le plus grand de la tôle de cisaillement (2) sur la périphérie externe de la section tubulaire élastomère au moyen d'une liaison par vis de serrage (5, 6).

3. Raccord pour tubes selon la revendication 1, **caractérisé en ce que** le collier de serrage (3) peut être appliqué par l'intermédiaire d'une couche intermédiaire élastomère sur la seconde extrémité de la tôle de cisaillement (2) .

4. Raccord pour tubes selon la revendication 3, **caractérisé en ce que** la couche intermédiaire élastomère est formée comme une extrémité rabattue de 180° de la section tubulaire élastomère, l'extrémité pourvue de découpes (4) de la tôle de cisaillement (2) étant logée dans une poche (8) en l'extrémité de la section tubulaire élastomère.

5. Raccord pour tubes selon la revendication 3, **caractérisé en ce que** la couche intermédiaire élastomère est fixée au collier de serrage (3).

6. Raccord pour tubes selon la revendication 1, **caractérisé en ce que** les découpes (4) présentent une forme de coupe variant dans la largeur le long de leur longueur.

7. Raccord pour tubes selon la revendication 1, **caractérisé en ce que** la section tubulaire élastomère présente, en au moins une extrémité, un bourrelet (7) orienté radialement vers l'extérieur.

8. Raccord pour tubes selon la revendication 1, **caractérisé en ce que** les surfaces de compression (11, 21) sont pourvues, dans la zone centrale axiale de la tôle de cisaillement (2), en dehors de la zone d'extrémité de la tôle de cisaillement (2), à chaque fois d'un ou de plusieurs évidements (12, 19).

9. Raccord pour tubes selon la revendication 6, **caractérisé en ce que** les évidements (12, 19) sont réalisés de manière allongée dans la direction périphérique de la tôle de cisaillement (2).
